# EUROPEAN PATENT APPLICATION

(11) **EP 3 462 581 A1**
(43) Date of publication of application: **03.04.2019**
(21) Application number: 18195441.3
(22) Date of filing: 19.09.2018
(51) Int. Cl.: H02K 5/24, H02K 9/06, H02K 5/20

(54) **MOTOR, BLOWING DEVICE, AND CLEANER**

(30) Priority: 29.09.2017 JP 2017191041
(71) Applicant: Nidec Corporation, Kyoto-shi, Kyoto 601-8205 (JP)
(72) Inventor: KONDO, Shoma, Kyoto, 601-8205 (JP); SAWASAKI, Motoi, Kyoto, 601-8205 (JP); IKENO, Shota, Kyoto, 601-8205 (JP); XIA, Zhenquan, Kyoto, 601-8205 (JP)
(74) Representative: Zimmermann, Tankred Klaus

(57) **Abstract**

A motor (1) includes a shaft (10) disposed along a central axis (C); a rotor (20) fixed to the shaft (10) and is capable of rotating around the central axis (C); a stator (30) disposed on an outside from the rotor (20); a first housing (40) having a cylindrical portion (41) and disposed on an outside of the stator (30); and a second housing (50) disposed on an upper side of the first housing (40). The second housing (50) includes a top plate (51), and a plurality of projected portions (53) extending downward and disposed to be spaced apart. A plurality of first ribs (56) extending from both end portions of the projected portion (53) in the circumferential direction to an inside in the radial direction as viewed in the axial direction are disposed on a lower surface of the top plate (51).

## Description

### Field of the Invention

The present invention relates to a, motor, a blowing device, and a cleaner.

### Description of the Related Art

A technique for realizing a high speed and large torque of an electric machine having a rotor, such as an electric motor or a generator is disclosed in Japanese Unexamined Patent Application Publication No. 2017-79595. The electric motor disclosed in Japanese Unexamined Patent Application Publication No. 2017-79595 has a rotor including a shaft and an iron core wound around the shaft. Two shields facing each other with the iron core interposed therebetween are members formed in a disc shape and form a casing of the electric motor together with a frame. A through-hole is provided at a center of the shield to allow the shaft to penetrate therethrough and a housing for storing a bearing or the like is provided on an inner surface (surface on an iron core side) of the shield so as to surround the through-hole. Ribs for increasing the rigidity of the shield are provided on the inner surface of the shield. Specifically, eight ribs radially extending from the housing in a direction of an outer periphery are provided in the shield.

In the electric motor disclosed in Japanese Unexamined Patent Application Publication No. 2017-79595, a plurality of the ribs radially extending in the direction of the outer periphery are disposed at equal intervals in a circumferential direction about the shaft. A shape of the casing configuring an outside of the motor varies depending on the application of the motor. Therefore, even if the rigidity of the casing to which the ribs disclosed in Japanese Unexamined Patent Application Publication No. 2017-79595 is applied is improved, vibration of the casing may not be appropriately suppressed depending on the shape of the casing.

### SUMMARY OF THE INVENTION

A motor according to an exemplary embodiment of the invention includes a shaft that is disposed along a central axis extending in a vertical direction; a rotor that is fixed to the shaft and is capable of rotating around the central axis; a stator that is disposed on an outside from the rotor in a radial direction; a first housing that has a cylindrical portion extending in an axial direction and disposed on an outside of the stator in the radial direction; and a second housing that is disposed on an upper side of the first housing. The second housing includes a top plate expanding in a direction orthogonal to the central axis, and a plurality of projected portions extending downward from an outer edge of the top plate and disposed to be spaced apart in a circumferential direction. A plurality of first ribs, which extend from both end portions of the projected portion in the circumferential direction to an inside in the radial direction as viewed in the axial direction, are disposed on a lower surface of the top plate.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a perspective view of a motor according to an embodiment of the invention;
Fig. 2 is an exploded perspective view of the motor of the embodiment of the invention;
Fig. 3 is a vertical sectional view of the motor according to the embodiment of the invention;
Fig. 4 is a perspective view of a second housing as viewed from a lower side;
Fig. 5 is an enlarged view of a periphery of a projected portion of the second housing;
Fig. 6 is a vertical sectional view schematically illustrating a relationship between the projected portion and a recess portion;
Fig. 7 is a view for explaining a first modification example of the projected portion;
Fig. 8 is a view for explaining a second modification example of the projected portion;
Fig. 9 is a sectional perspective view of a blowing device according to an embodiment of the invention;
Fig. 10 is an exploded perspective view of the blowing device according to the embodiment of the invention; and
Fig. 11 is a perspective view of a cleaner according to an embodiment of the invention.

### DETAILED DESCRIPTION OF THE PREFERRED EMBODIMENTS

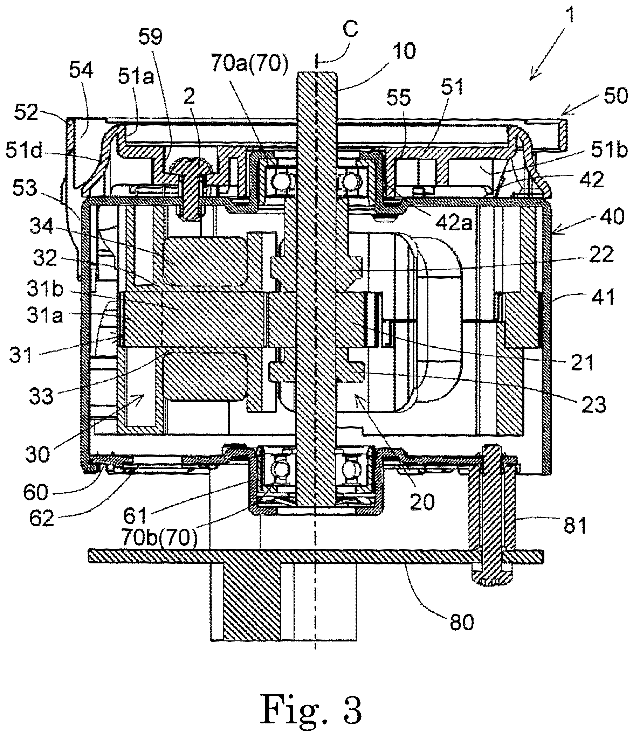

Hereinafter, exemplary embodiments of the invention will be described in detail with reference to the drawings. In this specification, when describing a motor and a blowing device, a direction parallel to a central axis C of a motor 1 illustrated in Fig. 3 is referred to as an "axial direction", a direction orthogonal to the central axis C of the motor 1 is referred to as a "radial direction", and a direction along a circular arc with the central axis C of the motor 1 as a center is referred to as a "circumferential direction". In addition, in this specification, the axial direction is a vertical direction and in the motor 1, a shape and a positional relationship of each portion will be described with a side of a second housing 50 upward with respect to a first housing 40. The vertical direction is simply used for explanation and does not limit a positional relationship and direction in an actual positional relationship.

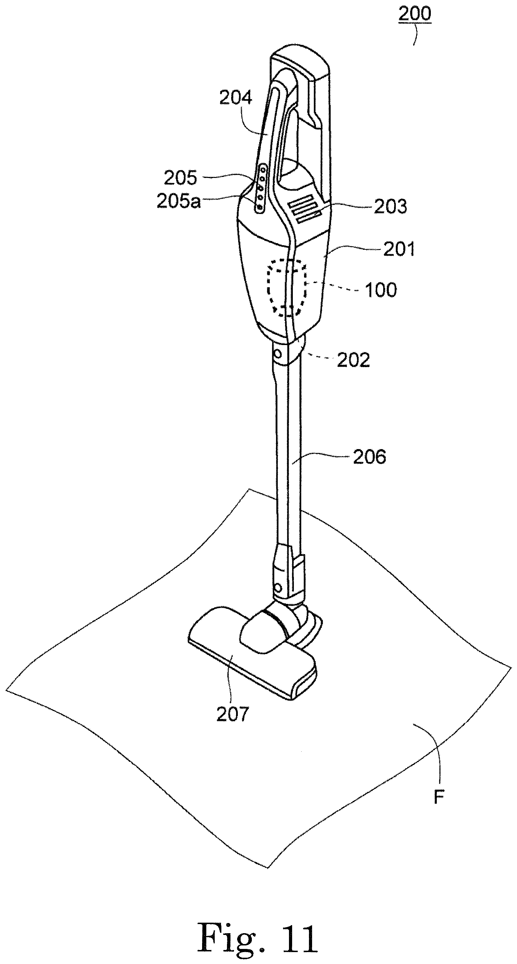

In this specification, when describing a cleaner 200, the shape and the positional relationship of each portion will be described with a direction approaching a floor surface F (surface to be cleaned) of Fig. 11 as "downward" and a direction away from the floor surface F as "upward". These directions are merely used for explanation and do not limit the actual positional relationship and the directions.

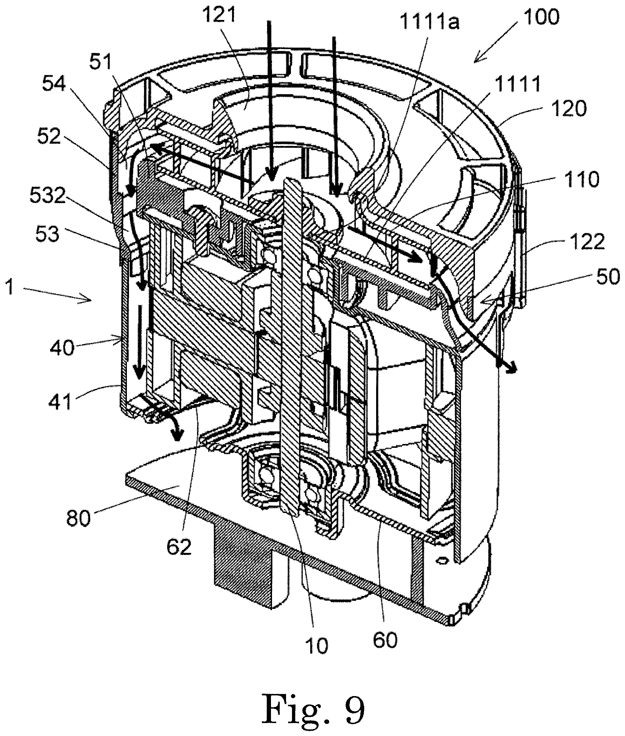

In addition, in this specification, an "upstream" and a "downstream" when an impeller 110 of a blowing device 100 illustrated in Fig. 9 is rotated respectively indicate upstream and downstream in a circulating direction of a fluid drawn in from a cover suction port 121.

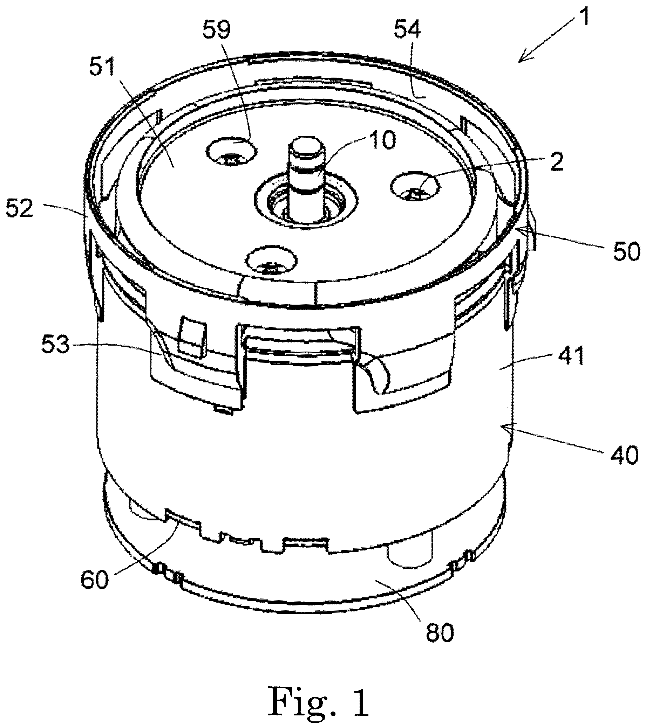

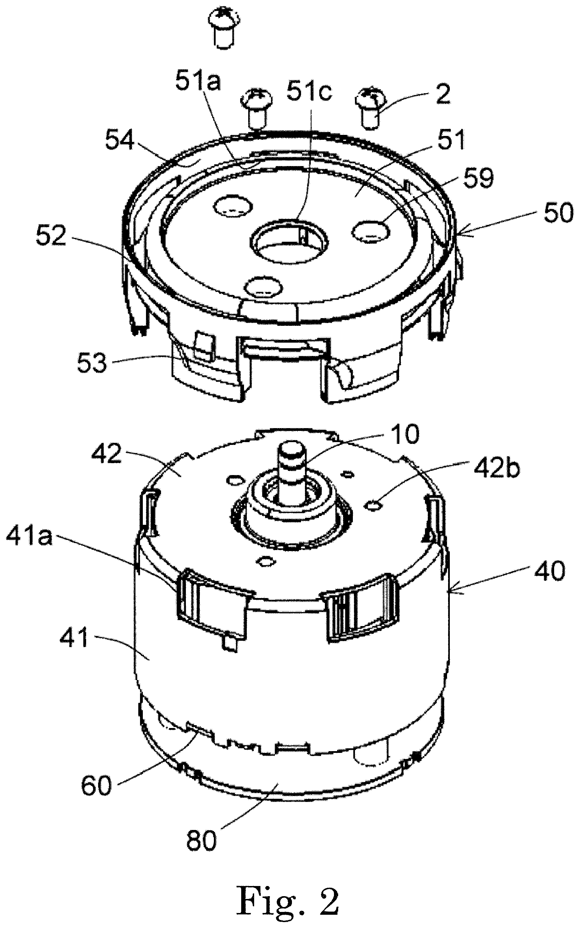

Fig. 1 is a perspective view of the motor 1 according to the embodiment of the invention. Fig. 2 is an exploded perspective view of the motor 1 of the embodiment of the invention. Fig. 3 is a vertical sectional view of the motor 1 according to the embodiment of the invention. As illustrated in Figs. 1 to 3, the motor 1 includes a shaft 10, a rotor 20, a stator 30, the first housing 40, and the second housing 50. Furthermore, the motor 1 includes a lower lid 60, a bearing 70, and a circuit board 80.

The shaft 10 is disposed along the central axis C which vertically extends. The shaft 10 is a columnar member made of, for example, metal.

The rotor 20 is fixed to the shaft 10 and is capable of rotating around the central axis C. As illustrated in Fig. 3, specifically, the rotor 20 includes a magnet 21, an upper fixing member 22, and a lower fixing member 23. The magnet 21 has a cylindrical shape is fixed to the shaft 10. In a surface of the magnet 21 on an outside in a radial direction, an N pole and an S pole are alternately arranged in a circumferential direction. The upper fixing member 22 and the lower fixing member 23 are cylindrical. The upper fixing member 22 and the lower fixing member 23 are fixed to the shaft 10 to sandwich the magnet 21 from above and below.

The stator 30 is disposed on an outside from the rotor 20 in the radial direction. As illustrated in Fig. 3, specifically, the stator 30 includes a stator core 31, an upper insulator 32, a lower insulator 33, and a coil 34. The stator core 31 includes an annular core back portion 31a and a plurality of teeth portions 31b extending from the core back portion 31a to an inside in the radial direction. The core back portion 31a is annular around the central axis C. The plurality of the teeth portions 31b are disposed at equal intervals in the circumferential direction. The stator core 31 may be configured by joining a plurality of core pieces. The stator core 31 may be configured by machining by stacking a plurality of magnetic steel plates.

The upper insulator 32 is an insulating member that covers a part of an upper surface and a side surface of the stator core 31. The lower insulator 33 is an insulating member that covers a part of a lower surface and the side surface of the stator core 31. The upper insulator 32 and the lower insulator 33 sandwich the teeth portions 31b in the axial direction. The upper insulator 32 and the lower insulator 33 cover each of the plurality of the teeth portions 31b. The coil 34 is configured by winding a conductive wire around the upper insulator 32 and the lower insulator 33 in each of the teeth portions 31b. That is, the insulators 32 and 33 are interposed between the teeth portions 31b and the coil 34. Therefore, the teeth portions 31b and the coil 34 are electrically insulated from each other.

The first housing 40 is a lidded cylindrical container for accommodating the rotor 20 and the stator 30. The first housing 40 is made of, for example, metal. The first housing 40 opens downward. The first housing 40 includes a cylindrical portion 41 and an upper lid portion 42. The cylindrical portion 41 extends in the axial direction. The cylindrical portion 41 is disposed on an outside of the stator 30 in the radial direction. That is, the first housing 40 includes the cylindrical portion 41 extending in the axial direction and disposed on the outside of the stator 30 in the radial direction. As illustrated in Fig. 2, the cylindrical portion 41 includes a plurality of recess portions 41a which are recessed downward. The plurality of the recess portions 41a are disposed at equal intervals in the circumferential direction. The upper lid portion 42 expands in a direction orthogonal to the axial direction and has a disk shape. The upper lid portion 42 includes a cylindrical upper bearing holding portion 42a protruding upward at a center portion.

The second housing 50 is disposed on an upper side of the first housing 40. The second housing 50 is made of, for example, resin. The second housing 50 is fixed to the first housing 40 by a fixing member 2. In the embodiment, the fixing member 2 is a screw. However, the fixing member 2 is not limited to the screw, but may be a rivet or the like. In the embodiment, screw holes 42b for fixing screws 2 are provided in the upper lid portion 42 of the first housing 40. The second housing 50 has a structure that guides a fluid from the outside of the motor 1 to the inside of the first housing 40. Details of the second housing 50 will be described later.

The lower lid 60 is attached to a lower end of the first housing 40. The lower lid 60 is a plate-like member made of, for example, metal. The lower lid 60 has a cylindrical lower bearing holding portion 61 protruding downward. The lower lid 60 has a plurality of lower lid through-holes 62 penetrating in the axial direction. The plurality of the lower lid through-holes 62 are disposed at equal intervals in the circumferential direction.

Specifically, the bearing 70 includes an upper bearing 70a disposed on an upper side of the rotor 20 and a lower bearing 70b disposed on a lower side of the rotor 20. The upper bearing 70a is held by the upper bearing holding portion 42a provided in the upper lid portion 42. The lower bearing 70b is held by the lower bearing holding portion 61 provided in the lower lid 60. In the embodiment, each of the bearings 70a and 70b is a ball bearing. An outer ring of each of the bearings 70a and 70b is fixed to an inner peripheral surface of each of the holding portions 42a and 61. An inner ring of each of the bearings 70a and 70b is fixed to an outer peripheral surface of the shaft 10. Therefore, the shaft 10 and the rotor 20 are supported to be capable of rotating with respect to the stator 30.

The circuit board 80 is disposed on a lower side of the lower lid 60. The circuit board 80 is fixed to the lower lid 60 with a predetermined distance by using a plurality of spacers 81. The circuit board 80 has a cylindrical shape and is formed by, for example, resin such as epoxy resin. Electronic components are disposed on the circuit board 80. The electronic components include, for example, an inverter and a control circuit. The circuit board 80 is electrically connected to the stator 30 by connection terminals (not illustrated).

When electric power is supplied from an electric power source to the coil 34 via the inverter, magnetic flux is generated in the plurality of the teeth portions 31b. A torque in the circumferential direction is generated by an operation of the magnetic flux between the teeth portions 31b and the magnet 21. As a result, the rotor 20 and the shaft 10 rotate about the central axis C.

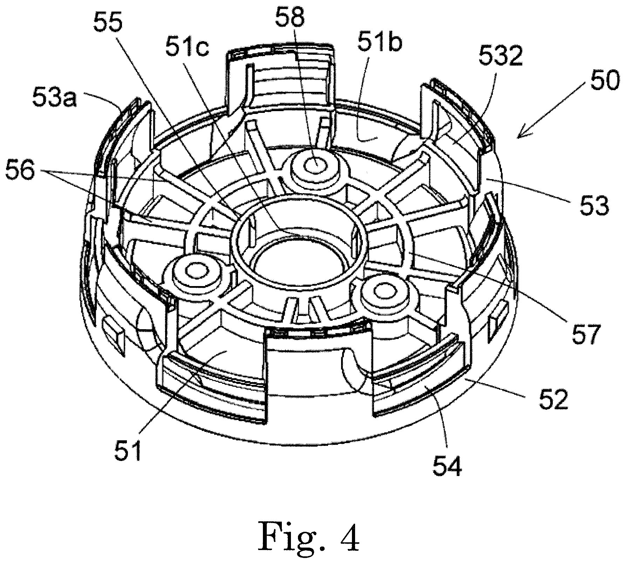

Fig. 4 is a perspective view of the second housing 50 as viewed from the lower side. As illustrated in Figs. 1 to 4, the second housing 50 includes a top plate 51 and a projected portion 53. The second housing 50 further includes an annular portion 52.

The top plate 51 expands in a direction orthogonal to the central axis C. The top plate 51 has a circular shape as viewed in the axial direction. In the embodiment, the top plate 51 has an upper recess portion 51a that is recessed downward in the axial direction on an upper surface side. The upper recess portion 51a has a circular shape as viewed in the axial direction. The top plate 51 has the lower recess portion 51b that is recessed upward in the axial direction on a lower surface side. The lower recess portion 51b has a circular shape as viewed in the axial direction. The top plate 51 has a shaft hole 51c penetrating in the axial direction at a center portion. When the second housing 50 is disposed on the first housing 40, the shaft 10 passes through the shaft hole 51c. The top plate 51 has an inclined portion 51d of which a width in the radial direction increases from an upper side to a lower side at an outer edge. Specifically, the inclined portion 51d is configured of a curved surface.

The annular portion 52 is disposed on the outside of the top plate 51 in the radial direction. The annular portion 52 has an annular shape as viewed in the axial direction. A center of the annular portion 52 coincides with a center of the top plate 51 as viewed in the axial direction. The central axis C passes through the center. A gap portion 54 is configured between the annular portion 52 and the top plate 51 in the radial direction.

The projected portion 53 extends downward from the outer edge of the top plate 51. Specifically, the projected portion 53 extends downward from a lower end of a side wall portion of the top plate 51 configuring the lower recess portion 51b. The projected portion 53 has a rectangular shape as viewed in the radial direction. The projected portion 53 has a thickness in the radial direction and an outer surface of the projected portion 53 in the radial direction is flush with an outer surface of the annular portion 52. In other words, the projected portion 53 has a shape extending downward from the top plate 51 and the annular portion 52. The projected portion 53 has a hollow portion 532 that is recessed toward the outside in the radial direction. The hollow portion 532 communicates with the gap portion 54 between the top plate 51 and the annular portion 52 in the radial direction, and the inside of the cylindrical portion 41. The second housing 50 has a plurality of the projected portions 53. The plurality of the projected portions 53 are disposed at intervals in the circumferential direction. In the embodiment, the plurality of the projected portions 53 are disposed at equal intervals in the circumferential direction.

A cylindrical hub portion 55 extending in the axial direction is provided at the center portion on the lower surface of the top plate 51. The hub portion 55 surrounds the shaft hole 51c. The hub portion 55 has a cylindrical shape. The hub portion 55 is disposed in the lower recess portion 51b as viewed in the axial direction. When the second housing 50 is disposed on the first housing 40, the hub portion 55 surrounds the upper bearing holding portion 42a (see Fig. 3).

A plurality of first ribs 56 extending from both end portions of the projected portion 53 in the circumferential direction to the inside in the radial direction as viewed in the axial direction are disposed on the lower surface of the top plate 51. The plurality of the first ribs 56 are disposed in the circumferential direction. The first ribs 56 are disposed in the lower recess portion 51b as viewed in the axial direction. The first rib 56 protrudes downward from the lower surface of the top plate 51. The first rib 56 extends from an inner surface of a side wall configuring the lower recess portion 51b to an outer surface of the hub portion 55.

An end portion of the projected portion 53 in the circumferential direction indicates a region having a width in the circumferential direction. In the embodiment, the first rib 56 is configured of two ribs disposed at intervals in the circumferential direction, but the number of the ribs configuring the first rib 56 may be one or three or more. In the embodiment, the first rib 56 with respect to each of the projected portions 53 is provided on the lower surface of the top plate 51 and the number of the first ribs 56 is six that are the same as that of the projected portions 53. However, a configuration in which the first ribs 56 are not provided with respect to all the projected portions 53 may be provided.

According to the embodiment, it is possible to improve the rigidity of the second housing 50 by the first ribs 56. Since the first rib 56 is provided with respect to each of the projected portions 53, it is possible to improve the rigidity around each of the projected portions 53. It is possible to suppress vibration of the second housing 50 due to the improvement of the rigidity when driving the motor 1.

An annular second rib 57 is disposed on the lower surface of the top plate 51. The second rib 57 is disposed in the lower recess portion 51b as viewed in the axial direction. The second rib 57 protrudes downward from the lower surface of the top plate 51. The second rib 57 is positioned on the inside from the outer end of the first rib 56 in the radial direction. The second rib 57 connects the plurality of the first ribs 56. In the embodiment, the second rib 57 is disposed on the outside of the hub portion 55 in the radial direction and has an annular shape. It is possible to further improve the rigidity of the second housing 50 by the second rib 57 compared to a case where only the first ribs 56 are provided. Therefore, it is possible to further suppress the vibration of the second housing 50 when driving the motor 1. Moreover, in the embodiment, the number of the second ribs 57 is one, but a plurality of the second ribs 57 may be provided.

The top plate 51 has a plurality of through-holes 58 penetrating in the axial direction. The second housing 50 is fixed to the first housing 40 by the fixing member 2 inserted into the through-hole 58. Therefore, the second housing 50 can be firmly fixed to the first housing 40 by the fixing member 2. That is, it is possible to suppress the vibration of the second housing 50 caused by the driving of the motor 1.

As described above, in the embodiment, the fixing member 2 is the screw. The screw hole 42b for fixing the screw 2 is provided in the upper lid portion 42. The plurality of the through-holes 58 are disposed in the upper recess portion 51a as viewed from above in the axial direction. The number of the plurality of the through-holes 58 is three, but the number may be changed. The number of fixing portions is increased by increasing the number of the through-holes 58, so that the second housing 50 can be firmly fixed to the first housing 40. A screw recess portion 59, which overlaps the through-hole 58 as viewed in the axial direction and of which a diameter is larger than that of the through-hole 58, is provided on the upper surface of the top plate 51. A head portion of the screw 2 can be prevented from protruding from the upper surface of the top plate 51 by the screw recess portion 59.

The through-hole 58 penetrates a part of the first rib 56. In other words, at least a part of an inner peripheral surface of the through-hole 58 is configured of a part of the first rib 56. According to the configuration, the through-hole 58 for inserting the fixing member 2 is provided in the vicinity of a portion of which the rigidity is enhanced by providing the first rib 56. Therefore, it is possible to firmly fixing and to suppress the vibration of the second housing 50 by the fixing member 2. However, the through-hole 58 may be provided at a position away from the first rib 56.

The through-hole 58 penetrates a part of the second rib 57. In other words, at least a part of the inner peripheral surface of the through-hole 58 is configured of a part of the second rib 57. According to the embodiment, the through-hole 58 for inserting the fixing member 2 is provided in the vicinity of the portion of which the rigidity is enhanced by providing the second rib 57. Therefore, it is possible to firmly fixing and to suppress the vibration of the second housing 50 by the fixing member 2. However, the through-hole 58 may be provided at a position away from the second rib 57. In the embodiment, the through-hole 58 is configured to penetrate a part of the first rib 56 and a part of the second rib 57, and it is possible to firmly perform the fixing by the fixing member 2.

The plurality of the through-holes 58 are disposed at equal intervals in the circumferential direction. Therefore, when the second housing 50 is fixed to the first housing 40, it is possible to prevent uneven distribution of portions having high fixing strength and to suppress occurrence of vibration.

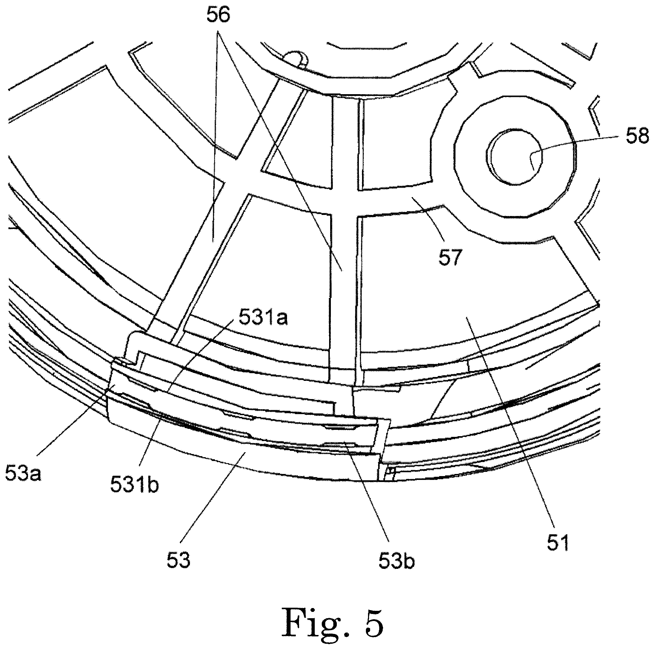

Fig. 5 is an enlarged view of a periphery of the projected portion 53 of the second housing 50. As illustrated in Figs. 4 and 5, the projected portion 53 has a first groove 53a extending in the circumferential direction at a lower end portion. The first groove 53a is recessed upward from the lower end portion of the projected portion 53 in the axial direction. The first groove 53a extends from one end to the other end of the projected portion 53 in the circumferential direction. The first groove 53a fits with a part of the cylindrical portion 41.

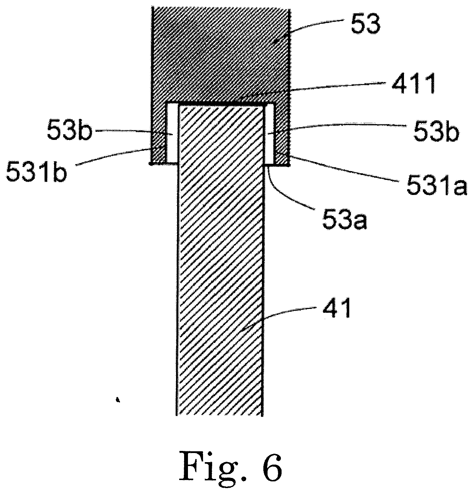

The projected portion 53 is inserted into the recess portion 41a (see Fig. 2) of the cylindrical portion 41. That is, the number of the plurality of the recess portions 41a is the same as that of the plurality of the projected portions 53. Fig. 6 is a vertical sectional view schematically illustrating a relationship between the projected portion 53 and the recess portion 41a. As illustrated in Fig. 6, the projected portion 53 is inserted into the recess portion 41a, so that a bottom wall portion 411 of the recess portion 41a fits into the first groove 53a. In other words, the projected portion 53 is inserted into the recess portion 41a, so that a lower end of the projected portion 53 is positioned on a lower side from the bottom wall portion 411. Therefore, a part of the cylindrical portion 41 fits into the first groove 53a of the projected portion 53, so that the projected portion 53 can be fixed to the first housing 40. Therefore, it is possible to suppress that the vibration occurs in the projected portion 53.

As illustrated in Figs. 5 and 6, the first groove 53a has a first groove inside protrusion 53b protruding in the radial direction on the side surface. In the embodiment, a plurality of the first groove inside protrusions 53b are provided. Specifically, the first groove inside protrusion 53b is provided on each of two side surfaces 531a and 531b which configure the first groove 53a and face each other in the radial direction. The first groove inside protrusion 53b provided on the side surface 531a on the inside in the radial direction protrudes to the outside in the radial direction. The first groove inside protrusion 53b provided on the side surface 531b on the outside in the radial direction protrudes to the inside in the radial direction. The number of the first groove inside protrusions 53b provided on each of the side surfaces 531a and 531b is the same, and in the embodiment, three protrusions are provided. In each of the side surfaces 531a and 531b, the plurality of the first groove inside protrusions 53b are aligned at intervals in the circumferential direction. Three first groove inside protrusions 53b provided on the side surface 531a on the inside in the radial direction and three first groove inside protrusions 53b provided on the side surface 531b on the outside in the radial direction face each other in the radial direction.

The projected portion 53 is inserted into the recess portion 41a, so that the first groove inside protrusion 53b provided on the side surface 531a on the inside in the radial direction is in contact with an inner surface of the cylindrical portion 41 in the radial direction. The projected portion 53 is inserted into the recess portion 41a, so that the first groove inside protrusion 53b provided on the side surface 531b on the outside in the radial direction is in contact with an outer surface of the cylindrical portion 41 in the radial direction.

The first groove inside protrusion 53b is provided, so that it is possible to suppress a decrease in the strength of the lower end of the projected portion 53 at which the first groove 53a is provided and to firmly fix the projected portion 53 to the cylindrical portion 41. Moreover, the number of the first groove inside protrusions 53b may be changed. For example, the first groove inside protrusion 53b may be provided on only one of the side surface 531a on the inside in the radial direction and the side surface 531b on the outside in the radial direction. In addition, the number of the first groove inside protrusions 53b aligned in the circumferential direction may be one or more on the side surface 531a on the inside in the radial direction or the side surface 531b on the outside in the radial direction. In addition, in a case where the first groove inside protrusions 53b are provided on both the side surface 531a on the inside in the radial direction and the side surface 531b on the outside in the radial direction, the position of the first groove inside protrusion 53b may be shifted or the number may be different between the side surface 531a on the inside in the radial direction and the side surface 531b on the outside in the radial direction. The first groove inside protrusion 53b may not be provided. In this case, the side surface configuring the first groove 53a may be configured to be in contact with the cylindrical portion 41.

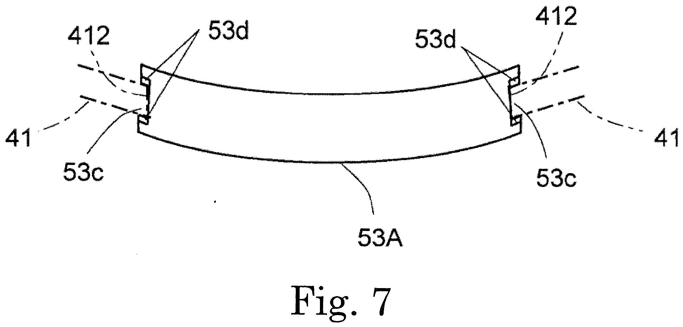

Fig. 7 is a view for explaining a first modification example of the projected portion 53. Fig. 7 is a plan view of a projected portion 53A as viewed from below. In addition to the projected portion 53A, a cylindrical portion 41 is indicated by a one-dotted chain line in Fig. 7.

As illustrated in Fig. 7, the projected portion 53A may have a second groove 53c extending in the axial direction on the side surface portion. The second groove 53c is recessed in the circumferential direction from the side surface portion of the projected portion 53A. The second groove 53c may extend from a lower end to an upper end of the projected portion 53A, or may not extend to the upper end. A length of the second groove 53c in the axial direction may be appropriately determined within a range in which the projected portion 53A can be inserted into a predetermined position of the recess portion 41a. Moreover, the upper end of the projected portion 53A described in here is a base of the projected portion 53A.

In the modification example, the second grooves 53c are provided at both side surface portions of the projected portion 53A in the circumferential direction. However, the second groove 53c may be provided at only one side surface portion of the projected portion 53A in the circumferential direction. In addition, a first groove 53a may be provided at the projected portion 53A at which the second groove 53c is provided.

The projected portion 53A is inserted into the recess portion 41a, so that a side wall portion 412 of the recess portion 41a fits into the second groove 53c. In other words, the projected portion 53A is inserted into the recess portion 41a, so that an end portion of the projected portion 53A in the circumferential direction is positioned on the outside from the side wall portion 412 in the circumferential direction. Therefore, since a part of the cylindrical portion 41 fits into the second groove 53c of the projected portion 53A, it is possible to fix the projected portion 53A to the first housing 40. Therefore, it is possible to suppress that vibration occurs in the projected portion 53A.

As illustrated in Fig. 7, it is preferable that the second groove 53c has a second groove inside protrusion 53d protruding in the radial direction on the side surface. It is preferable that a plurality of the second groove inside protrusions 53d are provided. Similar to the first groove inside protrusions 53b, it is preferable that the second groove inside protrusions 53d are provided on both two side surfaces which configure the second groove 53c and face each other in the radial direction. In addition, it is preferable that a plurality of the second grooves 53c are provided at intervals in the axial direction on each side surface. The projected portion 53A is inserted into the recess portion 41a, so that the second groove inside protrusion 53d is in contact with the cylindrical portion 41. The second groove inside protrusion 53d is provided, so that it is possible to suppress a decrease in the strength of the end portion of the projected portion 53A in the circumferential direction at which the second groove 53c is provided and to firmly fix the projected portion 53A to the cylindrical portion 41. Moreover, the second groove inside protrusion 53d may not be provided. In this case, the side surface configuring the second groove 53c may be configured to be in contact with the cylindrical portion 41.

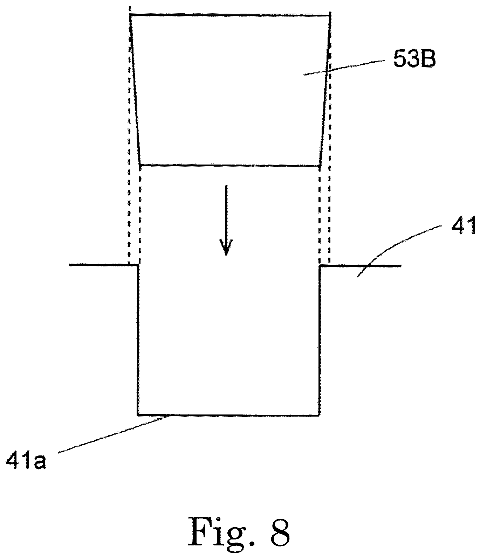

Fig. 8 is a view for explaining a second modification example of the projected portion 53. As illustrated in Fig. 8, a projected portion 53B has a tapered shape in which a width in the circumferential direction decreases from an upper side to a lower side. In the configuration, for example, the width of a lower end portion of the projected portion 53B in the circumferential direction is equal to a width of a recess portion 41a in the circumferential direction. Specifically, the width of the lower end portion of the projected portion 53B in the circumferential direction is slightly smaller than the width of the recess portion 41a in the circumferential direction. The projected portion 53B has a portion in which the width in the circumferential direction is larger than the width of the recess portion 41a on the upper side from the lower end portion due to the tapered shape. Therefore, the projected portion 53B inserted into the recess portion 41a is press-fitted into the recess portion 41a.

According to the modification example, it is possible to firmly fix the projected portion 53B to the cylindrical portion 41 without providing a first groove 53a and a second groove 53c in the projected portion 53B. However, also in the case of the modification example, at least one of the first groove 53a and the second groove 53c may be provided in the projected portion 53B.

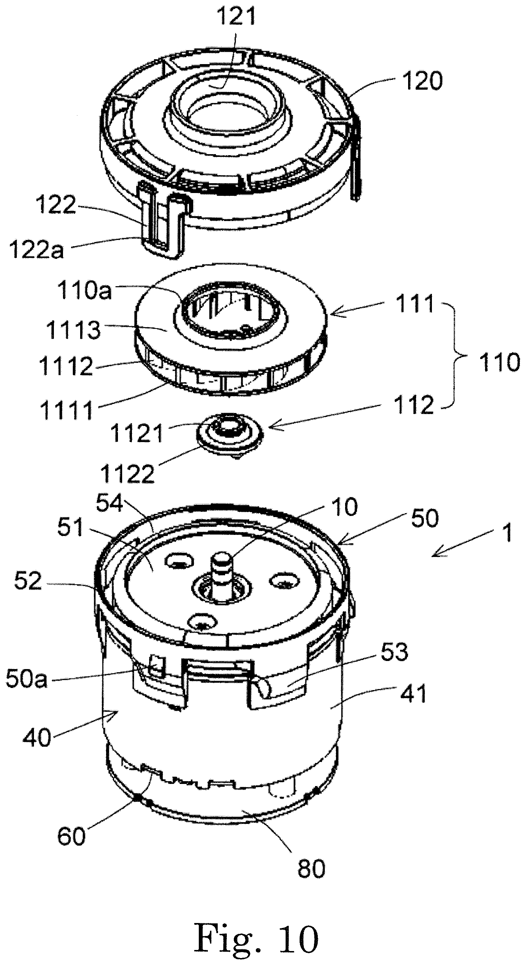

Next, an embodiment of the blowing device 100 to which the motor 1 of the embodiment is applied will be described. Fig. 9 is a sectional perspective view of the blowing device 100 according to the embodiment of the invention. Fig. 10 is an exploded perspective view of the blowing device 100 according to the embodiment of the invention. As illustrated in Figs. 9 and 10, the blowing device 100 includes the motor 1 and the impeller 110. The blowing device 100 further includes an impeller cover 120. The motor 1 is the motor of the embodiment described above.

The impeller 110 is disposed above the second housing 50. The impeller 110 is fixed to the shaft 10 and is capable of rotating together with the shaft 10. Specifically, the impeller 110 includes an impeller body 111 and an impeller hub 112.

The impeller body 111 includes a base portion 1111, a plurality of blades 1112, and a shroud 1113. The base portion 1111 has a disk shape. The base portion 1111 has a base portion through-hole 1111a at a center portion. The blade 1112 is a plate-like member curved in the circumferential direction extending from the inside to the outside in the radial direction on the upper side of the base portion 1111. The blades 1112 are disposed to stand upright along the axial direction. The shroud 1113 has a cylindrical shape tapered toward the upper side in the axial direction. An opening portion at the center of the shroud 1113 becomes an impeller suction port 110a of the impeller 110. The base portion 1111 and the shroud 1113 are connected by the plurality of the blades 1112.

The impeller hub 112 includes an impeller cylindrical portion 1121 and an impeller flange portion 1122. The impeller cylindrical portion 1121 extends in the axial direction and has a cylindrical shape. The impeller flange portion 1122 expands from an outer peripheral surface of the impeller cylindrical portion 1121 to the outside in the radial direction. The impeller flange portion 1122 has an annular shape.

The impeller cylindrical portion 1121 is inserted into the base portion through-hole 1111a, so that the impeller hub 112 is attached to the impeller body 111. The impeller cylindrical portion 1121 may be press-fitted into the base portion through-hole 1111a, or may be fixed by adhesive or the like. The upper end portion of the shaft 10 is fitted into the impeller cylindrical portion 1121, so that the impeller 110 is fixed to the shaft 10. The impeller flange portion 1122 is in contact with an upper surface of the base portion 1111 and functions as a stopper.

The impeller cover 120 is disposed above the impeller 110 to cover the impeller 110. The impeller cover 120 has a cylindrical shape tapered toward the upper side in the axial direction. The impeller cover 120 has the cover suction port 121 on the upper side. The impeller cover 120 has a cover protrusion 122 on the outer peripheral surface in the radial direction. The cover protrusion 122 extends in the axial direction and protrudes downward from a lower end of the impeller cover 120. The cover protrusion 122 has a protrusion through-hole 122a penetrating in the radial direction. The protrusion through-hole 122a has a rectangular shape as viewed in the radial direction. In the embodiment, the impeller cover 120 has three cover protrusions 122. The three cover protrusions 122 are disposed at equal intervals in the circumferential direction. The number and the arrangement of the cover protrusions 122 may be changed.

The second housing 50 has a housing protrusion 50a extending to the outside in the radial direction on the outer peripheral surface in the radial direction. The housing protrusion 50a has a rectangular shape as viewed in the radial direction. In the embodiment, the number of the housing protrusions 50a is three in accordance with the number of the cover protrusions 122. The housing protrusion 50a is inserted into the protrusion through-hole 122a of the cover protrusion 122, so that the impeller cover 120 is fixed to the second housing 50. Moreover, the fixing method of the impeller cover 120 to the second housing 50 may be another method. For example, a fixing member such as a screw may be used or adhesive may be used.

When the impeller 110 is rotated by the driving of the motor 1, the fluid is sucked from the cover suction port 121 into the blowing device 100. Thick arrows of Fig. 9 indicate a flow of the fluid when driving the motor 1. Moreover, a representative example of the fluid is air.

The fluid sucked from the cover suction port 121 is sucked into the impeller 110 via the impeller suction port 110a. The impeller 110 discharges the fluid sucked from the impeller suction port 110a to the outside in the radial direction via an internal flow path. The fluid discharged from the impeller 110 enters the gap portion 54 of the second housing 50. A part of the fluid entering the gap portion 54 is discharged to the outside via an opening formed between the projected portions 53 adjacent in the circumferential direction of the second housing 50.

As described above, the hollow portion 532 of the projected portion 53 communicates with the gap portion 54. Furthermore, since the projected portion 53 has a structure to be inserted into the recess portion 41a of the cylindrical portion 41, the hollow portion 532 communicates with the inside of the cylindrical portion 41. Therefore, out of the fluid entering the gap portion 54, the fluid discharged to the outside enters the inside of the cylindrical portion 41 through the hollow portion 532. That is, the projected portion 53 can guide the fluid discharged from the impeller 110 to the inside of the first housing 40. Therefore, the inside of the motor 1 can be cooled. The fluid guided to the inside of the cylindrical portion 41 is discharged to the outside of the first housing 40 via the lower lid through-hole 62. The circuit board 80 can be cooled by the fluid discharged from the lower lid through-hole 62.

According to the embodiment, the rigidity of the second housing 50 is improved by the first ribs 56 and the second rib 57. In addition, the second housing 50 is fixed to the first housing 40 by the fixing member 2 and is fixed to the first housing using the first groove 53a provided in the projected portion 53. That is, the second housing 50 is firmly fixed to the first housing 40. Particularly, the projected portion 53 is firmly fixed to the first housing 40. Therefore, in a case where the impeller 110 rotates, the vibration of the second housing 50 can be suppressed and occurrence of noise can be suppressed.

Next, an embodiment of the cleaner 200 to which the blowing device 100 of the embodiment is applied will be described. Fig. 11 is a perspective view of the cleaner 200 according to the embodiment of the invention. As illustrated in Fig. 11, the cleaner 200 has the blowing device 100. The cleaner 200 is a so-called stick type electric cleaner. Moreover, the cleaner including the blowing device 100 may be another type electric cleaner such as a so-called robot type, canister type, or handy type.

The cleaner 200 has a casing 201 in which an intake portion 202 and an exhaust portion 203 are respectively provided on a lower surface and an upper surface. The cleaner 200 has a rechargeable battery (not illustrated) and is operated by electric power supplied from the battery. However, the cleaner 200 may have a power supply cord and operate with electric power supplied via the power supply cord connected to a power supply outlet provided on a wall surface of a living room.

An air passage (not illustrated) for connecting the intake portion 202 and the exhaust portion 203 is formed in the casing 201. A dust collecting portion (not illustrated), a filter (not illustrated), and the blowing device 100 are disposed in order from the intake portion 202 (upstream) to the exhaust portion 203 downstream) in the air passage. Trash such as dust contained in the air circulating through the air passage is captured by the filter and is collected in the dust collecting portion formed in a container shape. The dust collecting portion and the filter are configured to be attachable and detachable to and from the casing 201.

A grip portion 204 and an operation portion 205 are provided on an upper portion of the casing 201. A user can grasp the grip portion 204 and move the cleaner 200. The operation portion 205 has a plurality of buttons 205a. The user performs operation setting of the cleaner 200 with the operation of the buttons 205a. For example, a driving start, a driving stop, and a change in a rotational speed of the blowing device 100, and the like are instructed by operations of the buttons 205a. A rod-like suction pipe 206 is connected to the intake portion 202. A suction nozzle 207 is detachably attached to the suction pipe 206 at an upstream end of the suction pipe 206. Moreover, the upstream end of the suction pipe 206 is a lower end of the suction pipe 206 in Fig. 11.

The cleaner 200 of the embodiment has the blowing device 100 capable of suppressing vibration and noise in the second housing 50. Therefore, also in the cleaner 200, vibration and noise can be suppressed.

Various modifications can be made to the various technical features disclosed in the present specification without departing from the gist of the technical creation thereof. Also, a plurality of the embodiments and modification examples described in this specification may be implemented in combination in a possible range.

The present invention may be utilized, for example, in an electric machine having a blowing device such as a cleaner.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

## Claims

1. A motor (1) comprising:
a shaft (10) that is disposed along a central axis (C) extending in a vertical direction;
a rotor (20) that is fixed to the shaft (10) and is capable of rotating around the central axis (C);
a stator (30) that is disposed on an outside from the rotor (20) in a radial direction;
a first housing (40) that has a cylindrical portion (41) extending in an axial direction and disposed on an outside of the stator (30) in the radial direction; and
a second housing (50) that is disposed on an upper side of the first housing (40),
wherein the second housing (50) includes
a top plate (51) expanding in a direction orthogonal to the central axis (C), and
a plurality of projected portions (53) extending downward from an outer edge of the top plate (51) and disposed to be spaced apart in a circumferential direction, and
wherein a plurality of first ribs (56), which extend from both end portions of the projected portion (53) in the circumferential direction to an inside in the radial direction as viewed in the axial direction, are disposed on a lower surface of the top plate (51).

2. The motor (1) according to Claim 1,
wherein an annular second rib (57), which is positioned on an inside from an outer end of the first rib (56) in the radial direction and connects the plurality of the first ribs (56) with each other, is disposed on the lower surface of the top plate (51).

3. The motor (1) according to Claim 2,
wherein the top plate (51) has a plurality of through-holes (58) penetrating in the axial direction, and
wherein the second housing (50) is fixed to the first housing (40) by a fixing member (2) inserted into the through-hole (58).

4. The motor (1) according to Claim 3,
wherein the through-hole (58) penetrates a part of the first rib (56).

5. The motor (1) according to Claim 3 or 4,
wherein the through-hole (58) penetrates a part of the second rib (57).

6. The motor (1) according to any one of Claims 3 to 5,
wherein the plurality of the through-holes (58) are arranged at equal intervals in the circumferential direction.

7. The motor (1) according to any one of Claims 1 to 6,
wherein the cylindrical portion (41) has a plurality of recess portions (41a), which are recessed downward and into which the projected portions (53) are inserted, at an upper end portion,
wherein the projected portion (53) has a first groove (53a) extending in the circumferential direction, at a lower end portion, and
wherein a bottom wall portion (411) of the recess portion (41a) is fitted into the first groove (53a).

8. The motor (1) according to Claim 7,
wherein the first groove (53a) has a first groove inside protrusion (53b) protruding in the radial direction on a side surface.

9. The motor (1) according to any one of Claims 1 to 6,
wherein the cylindrical portion (41) has a plurality of recess portions (41a), which are recessed downward and into which the projected portions (53) are inserted, at an upper end portion,
wherein the projected portion (53) has a second groove (53c) extending in the axial direction, at a side surface portion, and
wherein a side wall portion of the recess portion (41a) is fitted into the second groove (53c).

10. The motor (1) according to Claim 9,
wherein the second groove (53c) has a second groove inside protrusion (53d) protruding in the radial direction, on the side surface.

11. The motor (1) according to any one of Claims 1 to 6,
wherein the cylindrical portion (41) has a plurality of recess portions (41a), which are recessed downward and into which the projected portions (53) are inserted, at an upper end portion, and
wherein the projected portion (53) has a tapered shape in which a width in the circumferential direction decreases from an upper side to a lower side.

12. A blowing device (100) comprising:
the motor (1) according to any one of Claims 1 to 11; and
an impeller (110) that is disposed above the second housing (50), is fixed to the shaft (10), and is capable of rotating together with the shaft (10),
wherein the second housing (50) further includes an annular portion (52) that is disposed on an outside of the top plate (51) in the radial direction,
wherein the projected portion (53) has a hollow portion (532) which is recessed to an outside in the radial direction, and
wherein the hollow portion (532) communicates with a gap portion (54) between the top plate (51) and the annular portion (52) in the radial direction, and an inside of the cylindrical portion (41).

13. A cleaner comprising:
the blowing device (100) according to Claim 12.
